# EUROPÄISCHE PATENTANMELDUNG

(11) **EP 1 375 120 A2**
(43) Veröffentlichungstag der Anmeldung: **02.01.2004**
(21) Anmeldenummer: 03013687.3
(22) Anmeldetag: 17.06.2003
(51) Int. Cl.: B30B 11/00, F16D 69/02, F16D 65/12, C04B 35/573

(54) **Vorrichtung und Verfahren zum Herstellen eines Formlings**

(30) Priorität: 29.06.2002 DE 10229296
(71) Anmelder: Komage-Gellner Maschinenfabrik KG, 54427 Kell am See (DE)
(72) Erfinder: Seimetz, Hans Georg, Dipl.-Ing., 66687 Wadern-Wadrill (DE)
(74) Vertreter: Bernhardt, Winfrid, Dr.-Ing.

(57) **Zusammenfassung**

Die Vorrichtung dient zum Herstellen eines flachen Formlings, der Hohlräume und zwischen den Hohlräumen Stege aufweist, die im wesentlichen zwei Scheiben verbinden.
Sie weist eine Pressform mit einer Matrize (10), einem Dorn (11), einem Unterstempel (12) und einem Oberstempel (14) auf.
In den Unterstempel (12) und den Oberstempel (14) ist jeweils ein Segmentstempel (13;15) integriert, der Stempelsegmente (35;35') im wesentlichen von der Querschnittsform der genannten Stege aufweist, mit denen er verschiebbar in Ausnehmungen (32;32') gleicher Querschnittsform des Unterstempels (12) bzw. Oberstempels (14) greift.
In die Pressform ist ein Kern (6) einzubringen, der die genannten Hohlräume formende Kernsegmente (7) aufweist, wobei die Zwischenräume (8) zwischen den Kernsegmenten (7) in der Pressform deckungsgleich mit den genannten Stempelsegmenten (35;35') angeordnet sind.

Die Stempelsegmente erlauben eine gesonderte Verdichtung der Formmasse in den Bereichen der Stege. Die genannten Ausnehmungen des Unterstempels und des Oberstempels stellen darüber hinaus gesonderte Füllräume für Formmasse im Bereich der Stege dar, und zwar die Ausnehmungen des Oberstempels zwischenzeitlich durch Füllung aus den Ausnehmungen des Unterstempels heraus unter Verschiebung von Materialsäulen aus den einen Ausnehmungen in die anderen, unmittelbar oder durch die Zwischenräume des Kernes hindurch, letzteres ggf. ferner durch die Formmasse für die Scheiben hindurch.

## Beschreibung

Die Erfindung bezieht sich auf eine Vorrichtung zum Herstellen eines, insbesondere flachen, Formlings, der Hohlräume und zwischen den Hohlräumen Stege aufweist, die im wesentlichen zwei Scheiben verbinden,
die eine Pressform mit einer den Außenumfang des Formlings formenden Matrize und zwei die Außenflächen der genannten Scheiben formenden, als Unterstempel und Oberstempel angeordneten Stempeln umfasst.
Ferner bezieht sich die Erfindung auf ein Verfahren zum Herstellen eines Formlings unter Anwendung der Vorrichtung.

In erster Linie stehen hier Formlinge von keramischen Bremsscheiben, Kupplungsscheiben, Reibscheiben usw. in Betracht.
Ein solches Verfahren ist aus der EP 0 788 468 B1 bekannt. Zu entnehmen ist der Schrift jedoch im wesentlichen nur das Prinzip, einen entfernbaren Kern zu verwenden. Eine Konkretisierung wird nicht vermittelt.

Die Formlinge tatsächlich hergestellter Bremsscheiben werden zur Bildung der Hohlräume in zwei, später verbundenen, Scheiben gepresst, die die Stege je zum Teil aufweisen.

Der Erfindung liegt die Aufgabe zugrunde, eine Vorrichtung zum Pressen einteiliger Formlinge der eingangs genannten Art zu schaffen. Zusätzlich liegt ihr die Aufgabe zugrunde, ein Verfahren der Anwendung der Vorrichtung zu schaffen.

Gemäß der Erfindung ist zunächst eine Vorrichtung der eingangs genannten Art vorgesehen, die gekennzeichnet ist
durch einen in den Unterstempel und/oder einen in den Oberstempel integrierten Segmentstempel, der Stempelsegmente im wesentlichen von der Querschnittsform der genannten Stege aufweist, mit denen er verschiebbar in Ausnehmungen gleicher Querschnittsform des Unterstempels bzw. Oberstempels greift,
sowie durch einen in die Pressform einzubringenden, entfernbaren Kern, der die genannten Hohlräume formende Kernsegmente aufweist, wobei die Zwischenräume zwischen den Kernsegmenten in der Pressform deckungsgleich mit den genannten Stempelsegmenten angeordnet sind.
Für die Herstellung eines ringförmigen Formlings weist in an sich bekannter Weise die angewandte Pressform ferner einen den Innenumfang formenden Dorn auf.

Die Stempelsegmente erlauben eine gesonderte Verdichtung der Formmasse in den Bereichen der Stege, die in den Zwischenräumen der Kernsegmente gebildet werden. Die Ausnehmungen des Unterstempels und/oder des Oberstempels, in denen die Stempelsegmente angeordnet sind, stellen darüber hinaus gesonderte Füllräume für Formmasse im Bereich der Stege dar, und zwar die Ausnehmungen des Oberstempels in weiterer Ausgestaltung der Erfindung zwischenzeitlich durch Füllung aus den Ausnehmungen des Unterstempels heraus unter Verschiebung von Materialsäulen aus den einen Ausnehmungen in die anderen, unmittelbar oder durch die Zwischenräume des Kernes hindurch, letzteres ggf. ferner durch die Formmasse für die Scheiben hindurch.
Der Kern ist in der Regel nur in Bezug auf seine Winkelstellung in der Pressförm gehalten und nicht in Bezug auf seine Höhenstellung, bleibt also insoweit "schwimmend".

Für die Herstellung eines ringförmigen Formlings mit von seinem Innenumfang zu seinem Außenumfang durchgehenden Kanälen als den genannten Hohlräumen ist ein dem Querschnitt des Pressformhohlraums angepasster, an der Matrize und/oder dem Dorn zentrierter ringförmiger Kern vorgesehen, bei dem die Kernsegmente am Außenumfang und am Innenumfang durch schmale Ringabschnitte gitterartig zusammengehalten sind, und der zerstörbar oder unter Auseinandernehmen aus dem Formling herausziehbar ist.
Die genannten Ringabschnitte hinterlassen am Innenumfang und am Außenumfang des Formlings an sich nicht angestrebte, aber nicht störende flache Rillen, die später spanend abgetragen werden können.

Der herausziehbare Kern könnte verwirklicht werden, indem seine Teile am äußeren und am inneren Umfang des ringförmigen Kerns, ggf. auch im Inneren, lösbar verbunden und nach außen und nach innen herausziehbar sind. Für das Herausziehen könnte man die Gestaltung der Hohlräume ein wenig ändern und anpassen.

Ein herausziehbarer Kern könnte jedoch auch aus nach außen und/oder nach innen aus dem Formling herausziehbaren Kemteilen bestehen, für die Bewegungseinrichtungen vorgesehen sind, mittels derer die Kemteile dornartig aus der Matrize bzw. dem Dorn vorschiebbar sind und in und nach außen hinter die Matrize bzw. in den Dorn hinein zurückziehbar sind, ggf. sogar auf gekrümmten Wegen.

Die Pressform ist in üblicher Weise in ein Pressengestell einzubauen und mittels Füllschiebern zu beschicken. Dabei kann die Dosierung auch gravimetrisch erfolgen, d.h. der Füllschieber mit einer abgewogenen Menge beschickt werden. Bei volumetrischer Dosierung wird einfach der jeweils von dem Unterstempel und ggf. dem unteren Segmentstempel freigegebene Raum in der Matrize randvoll gefüllt.

Als erfindungsgemäßes Verfahren zum Herstellen eines Formlings unter Anwendung einer erfindungsgemäßen Vorrichtung wird vorgeschlagen, dass die für die Stege vorgesehene Menge an Formmasse, ggf. mit Ausnahme einer von den Zwischenräumen des Kerns aufgenommenen Menge, bei gegenüber dem Unterstempel zurückgezogenem unteren Segmentstempel in die Ausnehmungen des Unterstempels gefüllt wird und durch Vorschieben des unteren Segmentstempels bei abgesenktem Oberstempel zum Teil in die Ausnehmungen des Oberstempels überführt wird und später durch gleichzeitiges Vorschieben des unteren und des oberen Segmentstempels die Formmasse aus den Ausnehmungen ausgestoßen wird und schließlich durch gleichzeitiges Vorschieben des Unterstempels und des Oberstempels die Verdichtung zu dem Formling erfolgt.
Dieses Verfahren kann in verschiedenen Varianten ausgeführt werden:

Nach einer ersten Variante wird die für die Stege vorgesehene Menge, mit Ausnahme der von den Zwischenräumen des Kems aufgenommenen Menge, in einem Arbeitsgang vollständig in die Ausnehmungen des Unterstempels gefüllt, die für die eine genannte Scheibe vorgesehene Menge, ggf. mit Ausnahme einer vorher eingefüllten Belagmasse, vorzugsweise in demselben Arbeitsgang, darübergefüllt und darüber der Kern eingebracht. Dann werden die Zwischenräume des Kerns gefüllt und die für die andere Scheibe vorgesehene Menge wird, vorzugsweise in demselben Arbeitsgang, darübergefüllt, und dann wird die Überführung in die Ausnehmungen des Oberstempels vorgenommen unter Verschieben von Materialsäulen innerhalb der Füllung und in den Zwischenräumen des Kerns im wesentlichen noch ohne Verdichtung.
Hier werden Materialsäulen also innerhalb der gesamten Füllung nach oben verschoben, nämlich aus den genannten Ausnehmungen im Unterstempel in die Formmasse für die eine Scheibe, aus dieser in die Zwischenräume der Kernsegmente, aus diesen in die Formmasse für die andere Scheibe und aus dieser in die betreffenden Ausnehmungen des Oberstempels. Am Ende dieses Schritts befindet sich in den genannten Ausnehmungen vorzugsweise im wesentlichen gleich viel Formmasse über wie unter dem Kern.
Da hier Verlagerungen der Formmasse zwischen den Schüttungen stattfinden, die die Scheiben und die Stege bilden, sind jeweils die diesen zugeordneten Mengen betrachtet, die dabei gleich bleiben. Die Menge einer Belagmasse wird als zugehörig zu der für die betreffende Scheibe vorgesehenen Menge angesehen.

Zum Herstellen eines Formlings mit einem Oberflächenbelag wird bei der vorstehenden ersten Variante zuerst über der durchgehend ebenen Oberfläche des Unterstempels die Belagmasse für die eine Scheibe eingefüllt und dann der untere Segmentstempel abgesenkt, wobei die zu füllende Höhe der Ausnehmungen des Unterstempels infolge der gleichen Schichtdicke der Belagmasse in wie neben den Ausnehmungen gleich bleibt,
und/oder zuletzt die Belagmasse für die andere Scheibe eingefüllt.

Nach einer zweiten Variante wird die für die Stege vorgesehene Menge, mit Ausnahme der von den Zwischenräumen des Kerns aufgenommenen Menge, erst nur zum Teil in die Ausnehmungen des Unterstempels gefüllt und dann wird bei auf den Unterstempel aufgelegtem Oberstempel die Überführung dieses Teils in die Ausnehmungen des Oberstempels vorgenommen und das Material so weit verdichtet, dass es in den Ausnehmungen des Oberstempels gehalten wird; dann wird der Oberstempel hochgezogen und der andere Teil der Menge in die Ausnehmungen des Unterstempels gefüllt, die für die eine Scheibe vorgesehenen Menge darübergefüllt und darüber der Kern eingebracht; die Zwischenräume des Kerns werden gefüllt und die für die andere Scheibe vorgesehene Menge wird darübergefüllt. Die genannten Mengen sind ggf. unter Berücksichtigung einer Belagmasse zu verstehen.

Nach einer dritten Variante wird die für die Stege vorgesehene Menge, ggf. mit einer Zugabe oder einem Abzug, in einem Arbeitsgang vollständig in die Ausnehmungen des Unterstempels gefüllt und darüber der Kern eingelegt oder die Menge auch mit in die Zwischenräume des eingelegten Kerns gefüllt; das spätere gleichzeitige Ausstoßen der Formmasse aus den Ausnehmungen des Unterstempels und des Oberstempels wird unter Verdichtung in die Zwischenräume des Kerns hinein vorgenommen, derart, dass die Formmasse in den Zwischenräumen gehalten wird, und der Kern wird zum Einfüllen der für die eine Scheibe vorgesehenen Menge entfernt und wieder eingelegt und die für die andere Scheibe vorgesehene Menge wird darübergefüllt.
Mit der genannten Zugabe entstehen über die Stege hinausgehende Verlängerungen in die Scheibe hinein (was dann bei den für diese vorgesehenen Mengen als Abzug zu berücksichtigen ist). Die Verlängerungen bewirken eine Verzahnung mit der Scheibe und vor allem eine Versetzung in der Faserstruktur des Formlings, wenn er, wie bevorzugt, unter Verwendung von Carbonfasern hergestellt wird. Der genannte Abzug stellt die Umkehrung dar, mit dem gleichen Ergebnis. Er erfordert, dass die Stempelsegmente auch über die Oberflächen des Unterstempels und des Oberstempels hinaus verschiebbar sind.

Als weitere Verfahrenweise im Rahmen der Erfindung ist vorgesehen, dass die für die eine Scheibe vorgesehene Menge an Formmasse in einem Arbeitsgang oder mehreren über der durchgehend ebenen Oberfläche des Unterstempels eingefüllt und verdichtet wird, der Kern eingebracht wird, die für die Stege vorgesehene Menge an Formmasse in mehreren Arbeitsgängen in die Zwischenräume des Kernes eingebracht und mittels des Segmentstempels des Oberstempels verdichtet wird, und dann die für die andere Scheibe vorgesehene Menge in einem Arbeitsgang oder mehreren eingefüllt und verdichtet wird. Dabei können zwischen dem Einfüllen verschiedener Lagen, insgesamt mindestens zwei, Verstärkungsgewebe eingelegt werden.
Für diese Verfahrensweise sind ebenfalls die Stempelsegmente über die Oberfläche des Oberstempels hinaus vorschiebbar. Der Unterstempel bedarf keines integrierten Segmentstempels.

Das erfindungsgemäße Verfahren ist vor allem vorgesehen für mit Kohlenstofffasern versetzte Kohlenstoffmassen mit Bindemitteln, die später durch eine Wärmebehandlung in nichtoxidierender Atmosphäre carbonisiert werden; ggf. wird anschließend durch Infiltration von flüssigem Silicium in den porösen Körper und erneute Wärmebehandlung die Kohlenstoffmasse unter Erhalt der, bis zu 18 mm langen Kohlenstofffasern ganz oder teilweise in Siliciumcarbid überführt.
Eine erste Erhitzung findet jedoch noch unter Druck in der Pressform statt, um die Formlinge zu verfestigen.

Die Bindemittel sind in der Regel thermisch aushärtbare Harze wie Phenolharze.
Die genannte erste Erhitzung zur Aushärtung des Bindemittels erreicht z.B. 170 bis 180°C oder mehr, die Verfestigung beginnt bei etwa 135°C. Die Carbonisierung wird bei ca. 750°C bis 1100°C durchgeführt.

Der zerstörbare Kern besteht bevorzugt aus einem pyrolisierbaren thermoplastischen Kunststoff, dessen Schmelzpunkt oberhalb der Aushärtungstemperatur des genannten Bindemittels liegt.
Der thermoplastische Kunststoff kann im Zuge der Carbonisierungsbehandlung aus dem Formling ausgeschmolzen und aufgefangen werden, z.B. bei 250 bis 280°C. Die aufgefangene Menge wird gesondert bei höherer Temperatur pyrolisiert.

Der zerstörbare Kern könnte auch aus einem niedrigschmelzenden Metall bestehen.
Ein unter Auseinandernehmen aus dem Formling herausziehbarer Kern bestünde beispielsweise aus Aluminium oder Stahl.

Die Zeichnungen geben ein Ausführungsbeispiel der Erfindung wieder.

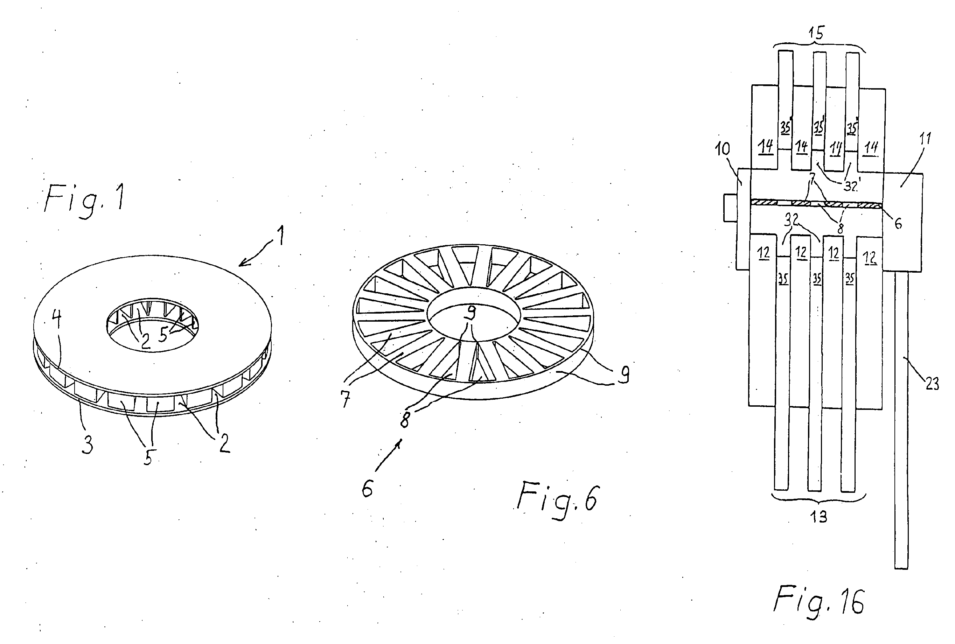

- Fig. 1: zeigt in isometrischer Darstellung einen Formling einer Keramik-Bremsscheibe,
- Fig. 2: zeigt in senkrechtem Schnitt den unteren Teil einer Pressenanordnung und einer Pressform,
- Fig. 3: zeigt in senkrechtem Schnitt den oberen Teil der Pressenanordnung und der Pressform,
- Fig. 4: zeigt den Unterstempel der Pressform in Draufsicht,
- Fig. 5: zeigt den Unterstempel der Pressform in einem senkrechten Schnitt nach Linie V-V in Fig. 4,
- Fig. 6: zeigt einen Kern in Draufsicht,
- Fig. 7 bis Fig. 15: zeigen schaubildlich in einem Fig. 5, linke Hälfte entsprechenden Schnitt die Betriebsweise der Presse und
- Fig. 16: zeigt schaubildlich einen Schnitt durch die Pressform nach Linie XVI-XVI in Fig. 4 sowie durch den Kern.

Der herzustellende Formling ist mit 1 bezeichnet. Er hat eine flach-ringförmige Gestalt. In seiner Mitte, bezogen auf die Scheibendicke, verlaufen Kanäle 2 vom Innenumfang zum Außenumfang. Im Material besteht der Formling demgemäß aus zwei Scheiben 3 und 4, die durch zwischen den Kanälen 2 verbleibende Stege 5 verbunden sind.

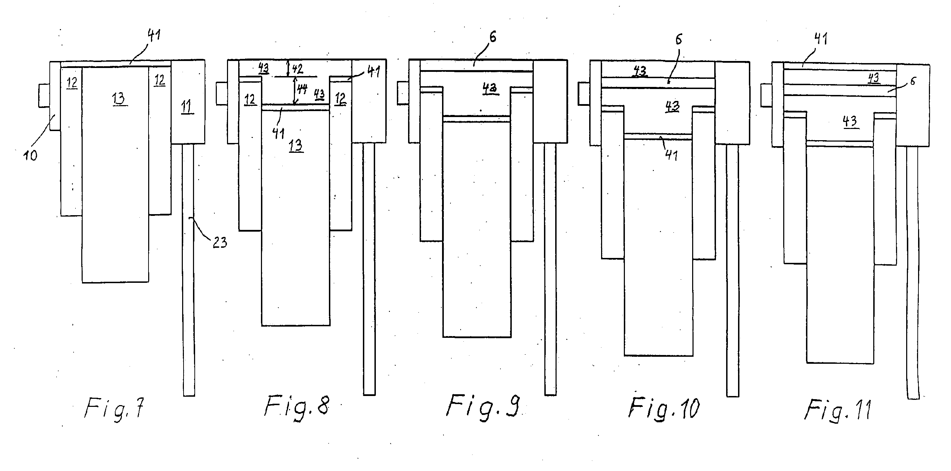

Die Gestalt der Kanäle 2 und Stege 5 ist aus Fig. 6 ersichtlich. Der dort gezeigte Kern 6 weist die Kanäle 2 in Form von Kernsegmenten 7 und die Stege 5 in Form von Zwischenräumen 8 auf. Die Kernsegmente 7 sind am Innenumfang und am Außenumfang durch schmale Ringabschnitte 9 verbunden.

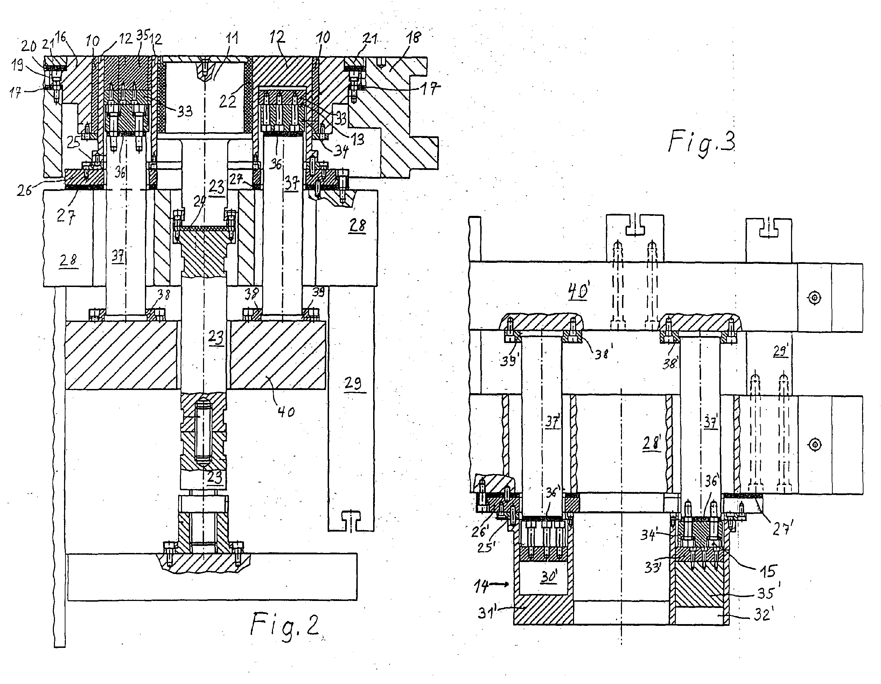

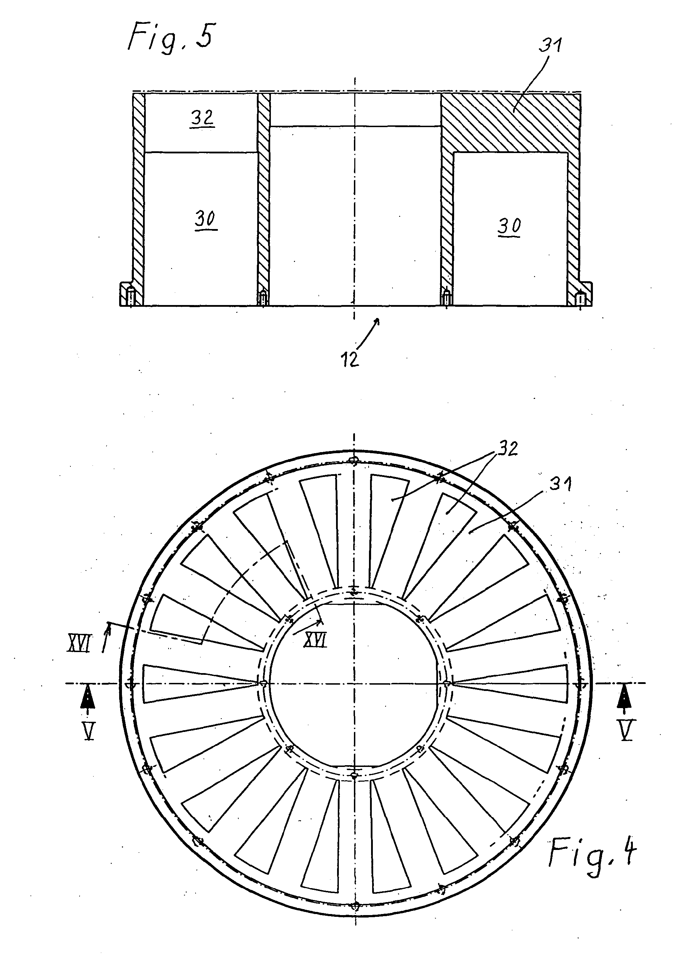

Die zur Herstellung des Formlings 1 angewandte Pressform setzt sich zusammen aus einer Matrize 10, einem Dorn 11, einem Unterstempel 12, einem unteren Segmentstempel 13, einem Oberstempel 14 und einem oberen Segmentstempel 15.
Die Teile 10 bis 13 erscheinen in Fig. 2, die Teile 14 und 15 in Fig. 3. Der Unterstempel 12 ist außerdem für sich in Fig. 4 und 5 dargestellt.

Die Matrize 10 hat die Form eines flachen Hohlzylinders und bildet die Außenwand der Pressform. Sie ist feststehend angeordnet. Sie sitzt in der aus der Zeichnung ersichtlichen Weise in einem Haltering 16. Dieser ist unter Zwischenlegung einer Isolierscheibe 17 zur elektrischen Isolierung im feststehenden Matrizentisch gelagert. Die betreffende Verschraubung 19 ist durch eine weitere Isolierscheibe 20 und einen die Tischoberfläche schließenden Ring 21 abgedeckt.

Der Dorn 11 bildet als Gegenstück zu der Matrize 10 in gleicher Höhe wie diese die Innenwand der ringförmigen Pressform. Er ist als ein Zylinder aus Vollmaterial mit einem verschleißfesten Außenmantel 22 ausgebildet. Auch er ist feststehend angeordnet, und zwar auf einer mehrfach zusammengesetzten Säule 23 unter elektrischer Isolierung durch eine zwischen zwei Säulenabschnitten angeordnete Isolierplatte 24.

Der Unterstempel 12 füllt den Ringquerschnitt zwischen der Matrize 10 und dem Dorn 11 aus und ist in diesem auf und ab beweglich. Er ist über einen Verschraubungsring 25, eine Stromanschlussplatte 26 und eine Isolierscheibe 27 abgestützt auf und verschraubt mit einer Platte 28 der Presse, die durch Säulen 29 mit dem Unterstempel der Presse verbunden sind.

Der Unterstempel 12 ist aus Vollmaterial gearbeitet. Auf einem unteren, größeren Teil seiner Höhe weist er einen ringförmigen Hohlraum 30 auf. In dem darüber stehengebliebenen Vollmaterial 31 sind senkrecht durchgehende Schächte 32 herausgearbeitet. Die Schächte haben im waagerechten Querschnitt, siehe Draufsicht Fig. 4, die gleiche Anordnung und etwa die gleiche Form .wie die Zwischenräume 8 in dem Kern 6.

Der untere Segmentstempel 13 besteht aus zwei zusammengeschraubten Ringen 33 und 34 aus Vollmaterial und auf den oberen Ring 33 aufgesetzten und mit ihm verschraubten Stempelsegmenten 35. Der untere Ring 34 ist unter Zwischenlegung von Isolierplatten 36 auf vier Säulen 37 abgestützt und mit ihnen verschraubt. Die Säulen 37 stehen mit von einem Haltering 38 übergriffenen Füßen 39 auf einer weiteren Platte 40 der Presse. Die Platte 40 ist mit einem weiteren Unterstempel der Presse verbunden.
Die Ringe 33 und 34 finden Platz in dem Hohlraum 30 des Unterstempels 12. Die Segmente 35 ragen in die Schächte 32 und füllen deren Querschnitt. In der unteren Endstellung des Segmentstempels 15 bilden sie einen die Schächte 32 nach unten verschließenden Boden, in einer oberen Stellung schließen sie bündig mit der Oberfläche des Unterstempels 12 ab. Diese Stellung findet sich in Fig. 2. Sie können aber noch darüber hinaus vorgeschoben werden.
Der Oberstempel 14 und der obere Segmentstempel 15 haben spiegelbildliche Ausbildung und Anordnung zu dem Unterstempel 12 und dem unteren Segmentstempel 13. Für die den Teilen 25 bis 40 entsprechenden Teile des Oberstempels 14 und des oberen Segmentstempels 15 sind die gleichen Bezugszeichen verwendet unter Hinzufügung von'.
Lediglich sind die Säulen 29' und 37' kleiner als die Säulen 29 bzw. 37 und mit Oberstempeln der Presse verbunden.

Die Stromanschlussplatten 26 und 26' sind an nicht gezeichneten Anschlüssen jeweils mit einer Vielzahl von Stromanschlussleitungen verbunden, die den Bewegungen des Unterstempels 12 bzw. Oberstempels 14 folgen können.

Mit den vorstehend beschriebenen Einrichtungen wird im vorliegenden Beispiel nach der ersten oben angegebenen Verfahrensvariante gearbeitet.

Das geschieht in sonst bekannter Weise in einem bekannten Pressengestell mit zwei Unterstempeln und zwei Oberstempeln sowie zwei Füllschiebern für die Formmasse und die Belagmasse. Die Dosierung erfolgt jedoch gravimetrisch durch Beschicken der Füllschieber mit abgewogenen Mengen.

Fig. 7 bis 15 zeigen schaubildlich zur Verdeutlichung der eingebrachten Mengen jeweils randvolle Füllung der Pressform wie bei volumetrischer Dosierung, d.h. bei entsprechend abgesenktem Unterstempel 12 und unterem Segmentstempel 13 bis zum oberen Rand der Matrize 10 und des Dornes 11.
Tatsächlich wird jedoch die jeweilige Menge bei tiefer abgesenktem Unterstempel 12 eingefüllt und anschließend gleichmäßig verteilt durch ein auf die Pressform aufgebrachtes Werkzeug mit in dem ringförmigen Formhohlraum umlaufenden Schaufeln. Die Füllschieber haben den.gleichen ringförmigen Hohlraumquerschnitt wie die Pressform.
Die Formmasse ist zwar granuliert, lässt sich aber wegen ihres Carbonfäserbestandteils nur mit solchem größeren Aufwand sicher beherrschen.

Zusätzlich zu Fig. 7 bis 15 soll zur Erleichterung der Vorstellung Fig. 16 dienen.

In Fig. 7 sind der Unterstempel 12 und der untere Segmentstempel 13 gegenüber dem oberen Rand der Matrize 10 und des Domes 11 um die Füllhöhe einer Reibbelagmasse 41 zurückgezogen. Die Oberseiten der Stempelsegmente und des Unterstempels liegen, in gleicher Ebene.

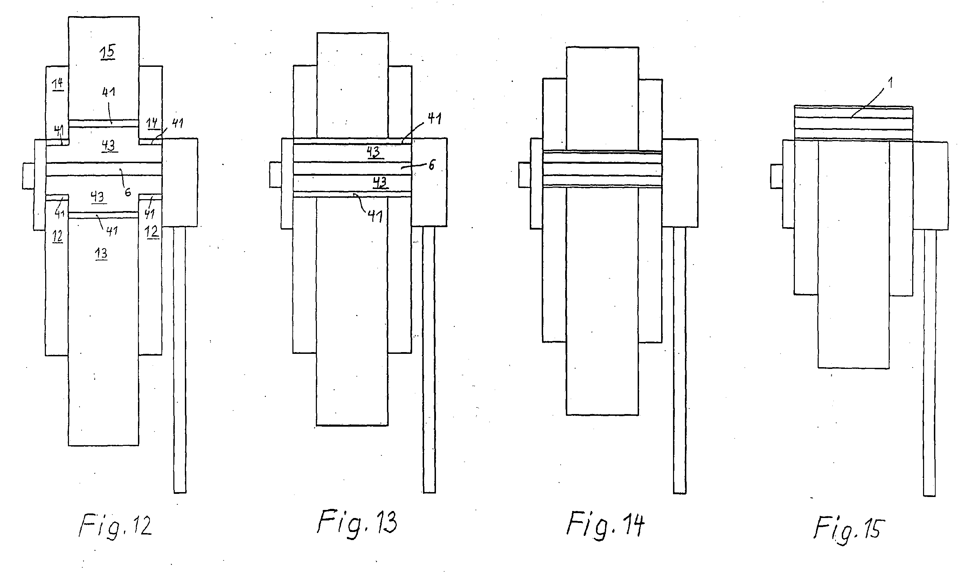

In Fig. 8 sind der Unterstempel 12 und der untere Segmentstempel 13 weiter zurückgezogen worden, und zwar unterschiedlich. Die mit 42 bezeichnete Füllhöhe über dem Unterstempel 12 entspricht etwa der für die eine Scheibe 3 des Formlings 1 vorgesehene Menge an Formmasse 43. Die mit 44 bezeichnete Füllhöhe über dem unteren Segmentstempel 13, d.h. in den Schächten 32, entspricht etwa der für die Stege 5 vorgesehenen Menge an Formmasse 43 vermindert um die in Fig. 11 in die Zwischenräume 8 des Kernes 6 eingefüllte Formmasse. Die zusätzliche Formmasse befindet sich an der Stelle der zu formenden Stege.

In Fig. 9 sind der Unterstempel 12 und der untere Segmentstempel 13 gleichmäßig weiter abgesenkt worden. Über der Füllung der Formmasse 43 ist der Kern 6 eingelegt worden.

In Fig. 10 sind der Unterstempel 12 und der untere Segmentstempel 13 gleichmäßig noch weiter abgesenkt worden. Die Füllhöhe über dem Kern,6 entspricht jetzt etwa der für die andere Scheibe 4 des Formlings 1 vorgesehenen Menge an Formmasse 43. Beim Einfüllen dieser Menge sind außerdem die Zwischenräume 8 des Kernes mit Formmasse 43 gefüllt worden, was bereits zu Fig. 8 erwähnt wurde.

In Fig. 11 sind der Unterstempel 12 und der untere Segmentstempel 13 noch einmal gleichmäßig abgesenkt worden und es ist eine Reibbelagmasse 41' für die andere Seite des Formlings 1 eingefüllt worden.

In Fig. 12 ist der Oberstempel 14 auf die Reibbelagmasse 41 abgesenkt worden und der untere Segmentstempel 13 angehoben worden. Bei diesem Anheben sind Materialsäulen im wesentlichen vom Querschnitt der Schächte 32 und 32' sowie der Zwischenräume 8 des Kernes 6 nach oben verschoben worden unter Verschiebung durch die Zwischenräume 8 hindurch. Es befindet sich jetzt ebenso viel Formmasse 43 in den Schächten 32' wie in den Schächten 32. Der obere Segmentstempel 15 war zugleich mit dem Oberstempel 14 auf den Reibbelag 41 abgesenkt worden und ist gleichläufig mit dem unteren Segmentstempel 13 angehoben worden. Er könnte auch die Stellung im Oberstempel 14 gemäß Fig. 12 von vornherein gehabt haben.

In Fig. 13 sind der untere Segmentstempel 13 und der obere Segmentstempel 15 vorgeschoben worden, sie haben damit die erwähnten Materialsäulen verdichtet. Die Oberflächen der Stempelsegmente 35 und 35' fluchten jetzt mit den Oberflächen des Unterstempels 12 bzw. Oberstempels 14.

In Fig. 14 sind der Unterstempel 12 mit dem unteren Segmentstempel 13 und der Oberstempel 14 mit dem oberen Segmentstempel 15 gleichmäßig vorgeschoben worden bis in die Endstellung. Der Oberstempel 14 ist dabei in den Pressformhohlraum zwischen der Matrize 10 und dem Dorn 11 eingedrungen. Der Formling ist nunmehr bis auf seine Endgröße verdichtet.

Das Vorschieben der Segmentstempel 13,15 in den beiden Stempeln 12,14 und das Vorschieben der Stempel 12,14 könnten statt zeitlich getrennt auch sich ganz oder teilweise überschneidend vorgenommen werden. Die zeitlich getrennte Verdichtung der die Stege 5 in dem Formling 1 bildenden Materialsäulen und der Formmasse insgesamt, bei der die Materialsäulen noch einmal gleichmäßig im Rahmen der Gesamtheit verdichtet werden, dürfte allerdings in den meisten Fällen vorzuziehen sein.

In dem vollständig verdichteten Zustand wird der Formling durch Anlegen einer Wechselspannung von z.B. 2 bis 3 V zwischen den Stromanschlussplatten 26 und 26' geheizt. Der Strom fließt aus der Stromanschlussplatte 26 in den Unterstempel 12, aus diesem in die untere Scheibe 3 des Formlings 1, dann durch die in den Zwischenräumen 8 des, nicht leitenden, Kerns 6 gebildeten Stege 5 des Formlings 1, aus diesen in die obere Scheibe 4 des Formlings 1 und weiter durch den Oberstempel 14 und dessen Stromanschlussplatte 26', bzw. umgekehrt.
Bestünde der Kern 6 aus Metall oder einem anderen leitenden Material, würde er, wie sich gezeigt hat, sich selbst erwärmen und die von ihm eingeschlossenen Stege 5 durch Wärmeübergang aufheizen.
Bei der weiter oben angegebenen Materialauswahl, d.h. mit Kohlenstofffasern versetzte Kohlenstoffmassen mit Bindemitteln aus Pechen und/oder thermisch aushärtbaren Harzen, haben die Formmasse 43 und die Reibbelagmasse 41 eine Leitfähigkeit, die ihre genügende Erhitzung ermöglicht und die Bindemittel haben die Fähigkeit, bei der Erhitzung so weit auszuhärten, dass die zusammengepresste, aufgrund ihres Faserbestandteils aber auseinanderstrebende Formmasse genügend verfestigt wird, so dass der Formling 1 weiterbehandelt werden kann.
Die Stromstärke, die sich bei den angelegten 2 bis 3 V einstellt, schwankt infolge der Veränderungen innerhalb des Formlings in weiten Grenzen. Sie kann bis auf 15000 A steigen, besonders am Anfang, und später bis auf 100 A sinken.
Die Steuerung der Heizung erfolgt als Intervallsteuerung ausgehend von einer Temperaturmessung durch ein aus einem der oberen Stempelsegmente 35' in einen der Stege 5 vorgeschobenes Thermoelement.

Fig. 15 zeigt den aus der Pressform ausgestoßenen Formling 1.
Es sei klargestellt, dass Fig. 7 bis 15 als Schaubilder nicht maßstabgetreu sind.

Der Kern 6 wird später in der weiter oben angegebenen Weise zerstört.

## Patentansprüche

1. Vorrichtung zum Herstellen eines, insbesondere flachen, Formlings (1), der Hohlräume (2) und zwischen den Hohlräumen (2) Stege (5) aufweist, die im wesentlichen zwei Scheiben (3;4) verbinden,
die eine Pressform mit einer den Außenumfang des Formlings (1) formenden Matrize (10) und zwei die Außenflächen der genannten Scheiben (3;4) formenden, als Unterstempel (12) und Oberstempel (14) angeordneten Stempeln umfasst,
**gekennzeichnet durch** einen in den Unterstempel und/oder einen in den Oberstempel (14) integrierten Segmentstempel (13; 15), der Stempelsegmente (35;35') im wesentlichen von der Querschnittsform der genannten Stege (5) aufweist, mit denen er verschiebbar in Ausnehmungen (32;32') gleicher Querschnittsform des Unterstempels (12) bzw. Oberstempels (14) greift,
sowie **durch** einen in die Pressform einzubringenden, entfernbaren Kern (6), der die genannten Hohlräume (2) formende Kernsegmente (7) aufweist, wobei die Zwischenräume (8) zwischen den Kernsegmenten (7) in der Pressform deckungsgleich mit den genannten Stempelsegmenten (35;35') angeordnet sind.

2. Vorrichtung nach Anspruch 1,
**dadurch gekennzeichnet,**
**dass** für die Herstellung eines ringförmigen Formlings (1) in an sich bekannter Weise die angewandte Pressform ferner einen den Innenumfang formenden Dorn (11) aufweist.

3. Vorrichtung nach Anspruch 2,
**dadurch gekennzeichnet,**
**dass** für die Herstellung eines ringförmigen Formlings (1) mit von seinem Innenumfang zu seinem Außenumfang durchgehenden Kanälen (2) als den genannten Hohlräumen (2) ein dem Querschnitt des Pressformhohlraums angepasster, an der Matrize (10) und/oder dem Dorn (11) zentrierter ringförmiger Kern (6) vorgesehen ist, bei dem die Kernsegmente (7) am Außenumfang und am Innenumfang durch schmale Ringabschnitte (9) gitterartig zusammengehalten sind und der zerstörbar oder unter Auseinandernehmen aus dem Formling (1) herausziehbar ist.

4. Vorrichtung nach Anspruch 1 oder 2,
**gekennzeichnet durch** nach außen und/oder nach innen aus dem Formling (1) herausziehbare Kernteile sowie **durch** Bewegungseinrichtungen, mittels derer die Kernteile dornartig aus der Matrize (10) bzw. dem Dorn (11) vorschiebbar sind und in und nach außen hinter die Matrize (10) bzw. in den Dorn (11) hinein zurückziehbar sind.

5. Verfahren zum Herstellen eines Formlings unter Anwendung einer Vorrichtung nach einem der Ansprüche 1 bis 4,
**dadurch gekennzeichnet,**
**dass** die für die Stege (5) vorgesehene Menge an Formmasse, ggf. mit Ausnahme einer von den Zwischenräumen (8) des Kerns (6) aufgenommenen Menge, bei gegenüber dem Unterstempel (12) zurückgezogenem unteren Segmentstemper(13) in die Ausnehmungen (35) des Unterstempels (12) gefüllt wird, und durch Vorschieben des unteren Segmentstempels (13) bei abgesenktem Oberstempel (14) zum Teil in die Ausnehmungen (35') des Oberstempels (14) überführt wird und später durch gleichzeitiges Vorschieben des unteren (13) und des oberen Segmentstempels (15) die Formmasse aus den Ausnehmungen (35;35') ausgestoßen wird und schließlich durch gleichzeitiges Vorschieben des Unterstempels (12) und des Oberstempels (14) die Verdichtung zu dem Formling (1) erfolgt.

6. Verfahren nach Anspruch 5,
**dadurch gekennzeichnet,**
**dass** die für die Stege (5) vorgesehene Menge, mit Ausnahme der von den Zwischenräumen (8) des Kerns (6) aufgenommenen Menge, in einem Arbeitsgang vollständig in die Ausnehmungen (35) des Unterstempels (12) gefüllt wird, die für die eine genannte Scheibe (3) vorgesehene Menge, ggf. mit Ausnahme einer vorher eingefüllten Belagmasse, vorzugsweise in demselben Arbeitsgang, darübergefüllt wird, darüber der Kern (6) eingebracht wird, die Zwischenräume (8) des Kerns (6) gefüllt werden und die für die andere Scheibe (4) vorgesehene Menge, vorzugsweise in demselben Arbeitsgang, darübergefüllt wird und dann die Überführung in die Ausnehmungen (35') des Oberstempels (14) vorgenommen wird unter Verschieben von Materialsäulen innerhalb der Füllung und in den Zwischenräumen (8) des Kerns (6) im wesentlichen noch ohne Verdichtung.

7. Verfahren nach Anspruch 6,
**dadurch gekennzeichnet,**
**dass** zum Herstellen eines Formlings (1) mit einem Oberflächenbelag zuerst über der durchgehend ebenen Oberfläche des Unterstempels (12) die Belagmasse für die eine Scheibe (3) eingefüllt wird und dann der untere Segmentstempel (13) abgesenkt wird, wobei die zu füllende Höhe der Ausnehmungen (35) des Unterstempels (12) infolge der gleichen Schichtdicke der Belagmasse in wie neben den Ausnehmungen (35) gleich bleibt,
und/oder zuletzt die Belagmasse (41) für die andere Scheibe (4) eingefüllt wird.

8. Verfahren nach Anspruch 5,
**dadurch gekennzeichnet,**
**dass** die für die Stege (5) vorgesehene Menge, mit Ausnahme der von den Zwischenräumen (8) des Kerns (6) aufgenommenen Menge, erst nur zum Teil in die Ausnehmungen (35) des Unterstempels (12) gefüllt wird und dann bei auf den Unterstempel (12) aufgelegtem Oberstempel (14) die Überführung dieses Teils in die Ausnehmungen (35') des Oberstempels (14) vorgenommen wird und das Material so weit verdichtet wird, dass es in den Ausnehmungen (35') des OberStempels (14) gehalten wird, dann der Oberstempel (14) hochgezogen wird und der andere Teil der Menge in die Ausnehmungen (35) des Unterstempels (12) gefüllt wird, die für die eine Scheibe (3) vorgesehenen Menge darübergefüllt wird, darüber der Kern (6) eingebracht wird, die Zwischenräume (8) des Kerns (6) gefüllt werden und die für die andere Scheibe (4) vorgesehene Menge darübergefüllt wird, die genannten Mengen ggf. unter Berücksichtigung einer Belagmasse.

9. Verfahren nach Anspruch 5,
**dadurch gekennzeichnet,**
**dass** die für die Stege (5) vorgesehene Menge, ggf. mit einer Zugabe oder einem Abzug, in einem Arbeitsgang vollständig in die Ausnehmungen (35) des Unterstempels (12) gefüllt wird und darüber der Kern (6) eingelegt wird oder die Menge auch mit in die Zwischenräume (8) des eingelegten Kerns (6) gefüllt wird, dass das spätere gleichzeitige Ausstoßen der Formmasse aus den Ausnehmungen (35:35') des Unterstempels (12) und des Oberstempels (14) unter Verdichtung in die Zwischenräume (8) des Kerns (6) hinein vorgenommen wird, derart, dass die Formmasse in den Zwischenräumen (8) gehalten wird und dass der Kern (6) zum Einfüllen der für die eine Scheibe (3) vorgesehenen Menge entfernt wird, und wieder eingelegt wird und die für die andere Scheibe (4) vorgesehene Menge darübergefüllt wird.

10. Verfahren zum Herstellen eines Formlings unter Anwendung einer Vorrichtung nach einem der Ansprüche 1 bis 4,
**dadurch gekennzeichnet,**
**dass** die für die eine Scheibe (3) vorgesehene Menge an Formmasse in einem Arbeitsgang oder mehreren über der durchgehend ebenen Oberfläche des Unterstempels (12) eingefüllt und verdichtet wird, der Kern (6) eingebracht wird, die für die Stege (5) vorgesehene Menge an Formmasse in mehreren Arbeitsgängen in die Zwischenräume (8) des Kernes (6) eingebracht und mittels des Segmentstempels (15) des Oberstempels (14) verdichtet wird, und dann die für die andere Scheibe (4) vorgesehene Menge in einem Arbeitsgang oder mehreren eingefüllt und verdichtet wird.

11. Verfahren nach Anspruch 10,
**dadurch gekennzeichnet,**
**dass** zwischen dem Einfüllen verschiedener Lagen, insgesamt mindestens zwei, Verstärkungsgewebe eingelegt werden.

12. Verfahren nach einem der Ansprüche 5 bis 11,
**dadurch gekennzeichnet,**
**dass** der Formling (1) durch Erhitzen in der Pressform (10-15) verfestigt wird.
